# EUROPÄISCHE PATENTSCHRIFT

(11) **EP 2 855 962 B1**
(45) Veröffentlichungstag und Bekanntmachung des Hinweises auf die Patenterteilung: **13.03.2019**
(21) Anmeldenummer: 13726708.4
(22) Anmeldetag: 24.05.2013
(51) Int. Cl.: F16D 65/18, F16J 3/04

(54) **BALG EINER SCHEIBENBREMSE UND SCHEIBENBREMSE EINES NUTZFAHRZEUGS**
GAITER OF A DISC BRAKE, AND DISC BRAKE OF A UTILITY VEHICLE
SOUFFLET DE FREIN À DISQUE ET FREIN À DISQUE DE VÉHICULE UTILITAIRE

(30) Priorität: 25.05.2012 DE 102012010518
(43) Veröffentlichungstag der Anmeldung: 08.04.2015
(73) Patentinhaber: KNORR-BREMSE Systeme für Nutzfahrzeuge GmbH, 80809 München (DE)
(72) Erfinder: WEGGARTNER, Robert, 84347 Pfarrkirchen (DE); ÖZER, Sükrü, 94501 Aldersbach (DE)
(86) Internationale Anmeldenummer: PCT/EP2013/060706
(87) Internationale Veröffentlichungsnummer: WO 2013/174964

(56) Entgegenhaltungen:
- EP-A1- 1 972 821
- EP-A2- 2 020 514
- WO-A1-2010/049133
- DE-A1- 1 943 570
- DE-A1- 3 601 683
- JP-A- 5 837 372
- US-A1- 2011 233 013

## Beschreibung

Die Erfindung betrifft einen Balg einer Scheibenbremse eines Nutzfahrzeugs, insbesondere einen Faltenbalg gemäß dem Oberbegriff des Anspruchs 1 und des Anspruchs 8 sowie eine pneumatisch oder elektromotorisch betätigbare Scheibenbremse eines Nutzfahrzeugs gemäß dem Oberbegriff des Anspruchs 12.

Ein gattungsgemäßer Balg und der prinzipielle Aufbau einer derartigen Scheibenbremse ist beispielsweise aus der DE 10 2006 050 519 B4 bekannt.

Ein solcher, insbesondere als Faltenbalg ausgebildeter Balg dient zum Schutz des Innenraums des Bremssattels und der Stellspindeln vor Verschmutzungen. Die Stellspindeln sind dabei Teil einer Zuspanneinrichtung der Scheibenbremse, wobei an einem Ende der Stellspindeln ein Druckstück auf der der Bremsscheibe zugewandten Seite der Zuspanneinrichtung vorgesehen ist, das gegenüber dem Bremssattel oder eine mit dem Bremssattel verbundenen Bauteil durch den oben genannten, an diesem und am Druckstück angeschlossenen verformbaren Balg abgedichtet ist.

Der Balg ist dabei seine beweglichen Teile üblicherweise als reines Elastomerteil ausgebildet, um eine axiale Beweglichkeit des Balges zu ermöglichen, die auf Grund der axialen Verschiebung des Gewinderohres entsprechend der Verschleißnachstellung und des Betätigungshubes notwendig ist.

Die Ausbildung der derzeit eingesetzten Bälge als reine Elastomerteile in ihren beweglichen Bereich ist jedoch hinsichtlich der thermischen Belastbarkeit des Elastomers noch unbefriedigend. Der Balg befindet sich üblicherweise in unmittelbarer Nähe zum Druckstück der Gewinderohreinheit, welches im direkten Kontakt zum Bremsbelag steht. Der Bremsbelag und damit auch das Druckstück heizen sich im Bremsfall stark auf. Kommt es zu einem Anliegen des Balges an das Druckstück, kann es an der Kontaktstelle zwischen Druckstück und Balg zu einer thermischen Überlastung des Elastomers kommen, wodurch das Elastomer spröde und damit undicht wird oder mit dem Druckstück verklebt, was die Beweglichkeit des Balges einschränkt und bei zunehmendem Verschleiß des Balges zu einer Zerstörung des Balges führen kann. Zusätzlich kann auch die thermische Abstrahlung des Bremsbelages zu einer solchen thermisch bedingten Beschädigung des Balges führen.

Da sich der Balg im Bereich eines Fahrzeuges befindet, in dem er einem hohen Eintrag von Fremdpartikeln wie Steinen, Sand, Wasser usw. ausgesetzt ist, kann durch diese Fremdpartikel auch eine mechanische Beschädigung des Balges hervorgerufen werden, die ebenfalls zu einer Undichtigkeit des Balges führen kann, so dass die Fremdpartikel bis zur Gewinderohreinheit vordringen können.

Aus der US2011/0233013 A1 und der WO 2010/049133 A1 ist eine Scheibenbremse mit einem Balg bekannt, bei der zum Schutz einer Außenfläche des Balges eine flexible, thermisch isolierende Materialschicht zwischen dem Balg und dem Druckstück vorgesehen ist bzw. bei der eine flexible, thermisch isolierende Materialschicht als Teil des Balges ausgebildet ist.

Bei der JP 58 37372 A ist die Außenfläche des Balges mit einer als Wärmeschutz dienenden nicht-magnetischen Metallschicht beschichtet.

Bei dem in der EP 2 020 514 A2 offenbarten Balg ist zum Schutz der Außenfläche des Balges über diesen ein insbesondere als Stichschutz dienender Schutzumhang übergelegt.

Bei dem in der EP 1 972 821 A1 offenbarten Balg sind zum Schutz von Außenflächen der Enden des Balges in den Balgenden als Wärmeschutz dienende Verstärkungseinlagen aus Metall eingesetzt.

Aus der DE 36 01 683 A1 ist eine Dichtung für die Befestigungsbolzen von Scheibenbremssätteln bekannt, bei der ein Faltenbalg von einer als Flachdraht hergestellten Schraubenfeder mit teleskopartig aufeinander gleitenden Windungen den Faltenbalg abgeschirmt ist. Die Endwindungen dieser Flachdrahtfeder drücken dabei gegen Flansche des Faltenbalges.

Aufgabe der vorliegenden Erfindung ist es, einen Balg einer Scheibenbremse eines Nutzfahrzeugs bereit zu stellen, der weniger anfällig gegenüber thermischen oder mechanischen Beschädigungen ist.

Diese Aufgabe wird durch einen Balg einer Scheibenbremse eines Nutzfahrzeugs mit den Merkmalen des Anspruchs 1 und des Anspruchs 8 gelöst.

Nach Anspruch 1 ist erfindungsgemäß auf einer Außenseite des Balges eine mit dem Balg verbundene und diesen zumindest abschnittsweise abschirmende Schutzeinrichtung angeordnet, wobei die Schutzeinrichtung mehrere zueinander beweglich ineinander gesteckte Teleskopringe auf, wobei jeder der Teleskopringe punktuell stoff- oder formschlüssig mit dem Mantel des Balges verbunden ist.

Dadurch wird die Robustheit des Balges, welcher in seinen flexiblen Bereich nach wie vor aus einem elastischen Material, insbesondere aus einem Elastomer besteht, durch die Schutzeinrichtung wirksam vor mechanischen und/oder thermischen Beschädigungen geschützt.

Durch die Ausbildung der Schutzeinrichtung als zueinander beweglich ineinander gesteckte Teleskopringe ist eine kompakte Bauweise des Balges gewährleistet.

Nach Anspruch 8 weist die Schutzeinrichtung mehrere Ringe auf, die jeweils ein Teilstück des Mantels abdecken und mit diesem Teilstück des Mantels stoff- oder formschlüssig verbunden sind. Die Ringe sind dabei insbesondere an den Spitzen der Falten eines als Faltenbalgs ausgebildeten Balges befestigt und schützen somit die aufgrund ihrer häufigen Bewegung und der exponierten Lage für einen Bruch des Mantels anfälligsten Stellen des Balgmantels.

Vorteilhafte Ausführungsvarianten der Erfindung sind Gegenstand der Unteransprüche.

Die Schutzeinrichtung ist gemäß einer bevorzugten Ausführungsvariante als flexible Schutzschicht ausgebildet, die zumindest abschnittsweise stoffschlüssig mit der Außenseite des Balges verbunden ist. Durch die flexible Ausbildung der Schutzschicht ist ein Mitbewegen der Schutzschicht mit der Bewegung des Balges durch Verschieben des Gewinderohres infolge der Verschleißnachstellung und des Betätigungshubes der Scheibenbremse ermöglicht.

Die Schutzschicht kann dabei die Außenseite des Balges vollflächig überdecken oder auch gemäß einer alternativen Ausführungsvariante eine offenporige Oberfläche aufweisen und insbesondere als Gewebe, Gitter oder Gaze ausgebildet sein. Dadurch wird sicher gestellt, dass durch das elastische Material des Balgmantels selbst, insbesondere aus einem Elastomere bestehend, nach wie vor die Dichtheit des Balges gewährleistet und die als flexible Schutzschicht ausgebildete Schutzeinrichtung das elastische Material des Balges vor mechanischen und/oder thermischen Beschädigungen schützt.

Die erfindungsgemäße Scheibenbremse zeichnet sich durch den Einsatz eines solchen im Vorstehenden beschriebenen Balges aus, wodurch die Verschleißanfälligkeit wesentlich reduziert ist und sich dadurch auftretende Montage- und Materialkosten sowie Stillstandzeiten des Fahrzeugs reduzieren lassen.

Nachfolgend werden Ausführungsbeispiele der Erfindungen anhand der beiliegenden Zeichnungen näher erläutert.

Es zeigen:
- Figur 1: eine Teildarstellung einer Scheibenbremse in einer geschnitten Draufsicht;
- Figur 2a: eine erste Ausführungsvariante eines erfindungsgemäßen Balges in einer Seitenschnittansicht im eingefalteten Zustand des Balges,
- Figur 2b: die in Figur 2a gezeigte Ausführungsvariante des erfindungsgemäßen Balges in einer Seitenschnittansicht im ausgefalteten Zustand des Balges,
- Figur 2c: eine zweite Ausführungsvariante eines erfindungsgemäßen Balges in einer Seitenschnittansicht im eingefalteten Zustand des Balges,
- Figur 3 bis 6: weitere Ausführungsvarianten eines erfindungsgemäßen Balges in einer Seitenschnittansicht.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Balges, des Bremssattels, der Zuspanneinrichtung und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

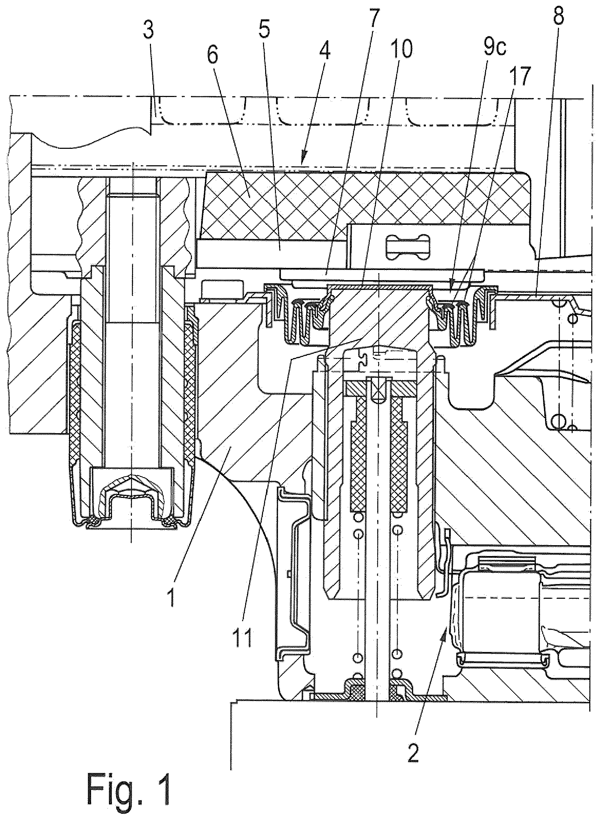

In Figur 1 ist mit dem Bezugszeichen 1 ein Bremssattel einer teilweise abgebildeten Scheibenbremse bezeichnet, wobei der Bremssattel 1 eine Bremsscheibe 3 in ihrem oberen Umfangsbereich umfasst. Die Scheibenbremse kann dabei pneumatisch oder elektromotorisch betätigbar sein.

Beidseitig der Bremsscheibe 3 sind jeweils Bremsbeläge 4 vorgesehen, die aus einer Trägerplatte 5 und einem Reibbelag 6 bestehen, der auf einer der Bremsscheibe 3 zugewandten Seite der Trägerplatte 5 befestigt ist.

Auf der der Bremsscheibe 3 abgewandten Seite des zuspannseitigen Bremsbelags 4 ist ein Druckstück 7 angeordnet, dass über eine im Bremssattel 1 angeordnete drehebelbetätigte Zuspanneinrichtung 2 mithilfe einer Stellspindel 11 gegen den Bremsbelag 4 gedrückt wird.

Die vorzugsweise als Gewindespindel ausgebildete Stellspindel 11 ist zur Einstellung eines Lüftspiels zwischen dem Reibbelag 6 und der Bremsscheibe 3 je nach Verschleiß des Reibbelages 6 drehbar in Bremssattel 1 gelagert und über eine nicht gezeigte Nachstelleinrichtung bewegbar.

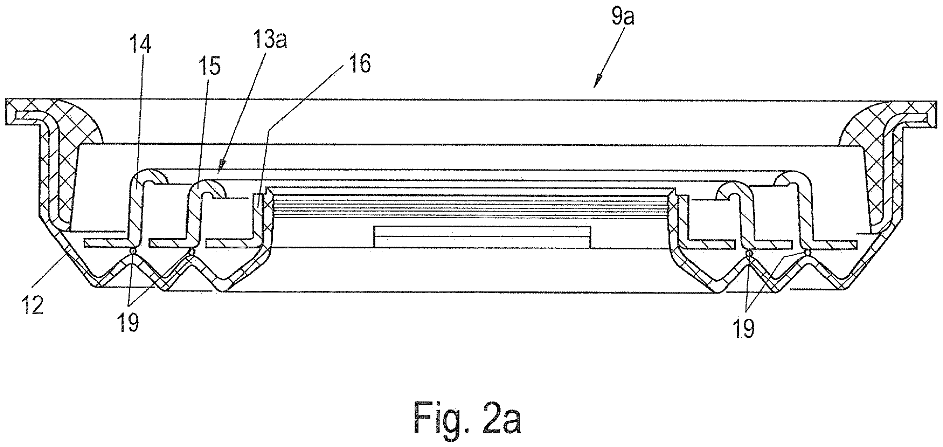

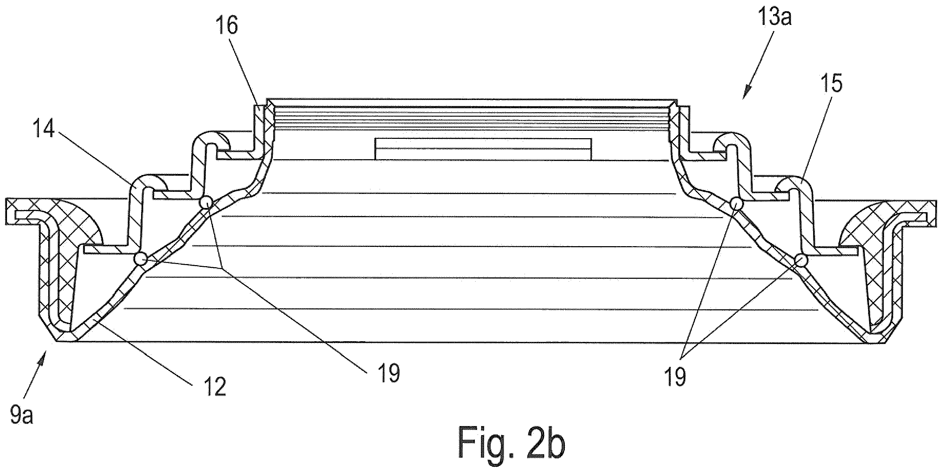

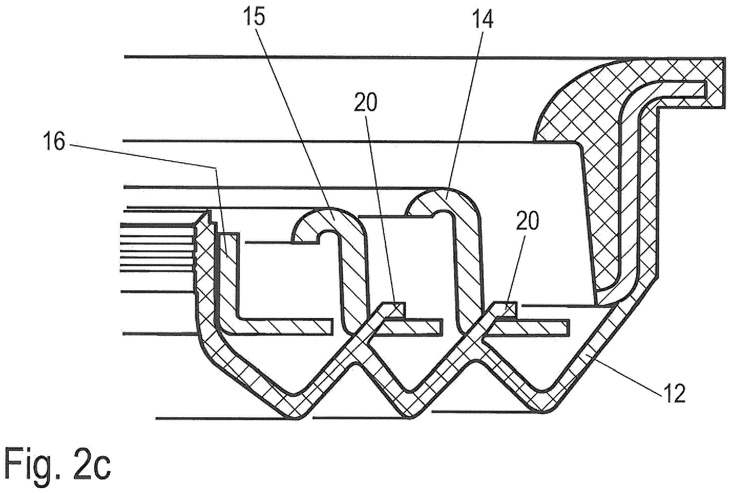

Zur Abdichtung des Austrittsbereiches der Stellspindel 11 aus dem Bremssattel 1 ist ein vorzugsweise als Faltenbalg ausgebildeter Balg 9c vorgesehen, der direkt am Bremssattel 1 verdrehsicher festgelegt oder alternativ mit einer Verschlussplatte 8 verbunden ist, die den Bremssattel 1 auf seiner der Bremsscheibe 3 zugewandten Seite weitgehend verschließt und die im Austrittbereich der Stellspindel 11 durchbrochen ist. Die in dieser Figur dargestellte Ausführungsvariante des Balges 9c ist dabei beispielhaft zu verstehen. Weitere mögliche Ausgestaltungen des Balges sind in den Figuren 2 bis 6 gezeigt, auf die nachfolgend näher eingegangen wird.

Der in den Figuren 2 bis 6 in unterschiedlichen Ausführungsvarianten gezeigte Faltenbalg 9a, 9b, 9c, 9d, 9e, der in seinem beweglichen Bereich aus einem flexiblen Mantel aus einem elastischen Material, insbesondere einem Elastomer besteht, weist auf einer Außenseite des Mantels eine mit dem Mantel 12 verbundene und diesen zumindest abschnittsweise abschirmende Schutzeinrichtung 13a, 13b, 13c, 13d, 13e auf und umhüllt dabei ganz oder teilweise den Mantel und schützt diesen so vor mechanischer Beschädigung und/oder thermische Überlastung.

Die Schutzeinrichtung 13a, 13b, 13c, 13d, 13e besteht dabei vorzugsweise aus einem Material, welches gegenüber dem Mantel, welcher beispielsweise aus einem Elastomer besteht, eine höhere Temperaturbeständigkeit aufweist und/oder eine höhere Robustheit gegenüber mechanischer Beschädigung. Besonders bevorzugt ist es, wenn als Material für die Schutzeinrichtung 13a, 13b, 13c, 13d, 13e ein Material verwendet wird, welches sowohl eine höhere Temperaturbeständigkeit als auch eine große Robustheit gegenüber mechanischen Beschädigungen aufweist. Als mögliche Materialien kommen dabei insbesondere Metalle, Duroplaste oder Thermoplaste in Frage.

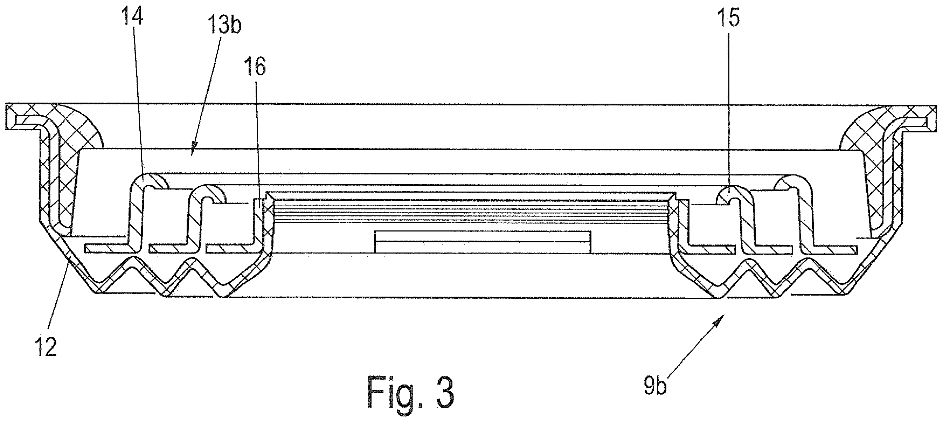

In den Figuren 2a, 2b, 2c und 3 steht die Schutzeinrichtung 13a, 13b aus mehreren zueinander beweglich ineinander gesteckten Teleskopringen 14, 15, 16.

Während bei der in Figur 3 gezeigten Ausführungsvariante nicht alle Teleskopringen 14, 15, 16 mit dem Mantel 12 verbunden sind, sondern hier nur der erste Teleskopring 16 und ggfs. der äußerste Teleskopring 14 form- oder stoffschlüssig mit dem Mantel 12 des Balges 9b verbunden ist, ist bei der in den Figuren 2a, 2b und 2c gezeigten Ausführungsvariante des Balges jeder der Teleskopringe 14, 15 ,16 mit der Außenseite des Mantels 12 verbunden, wobei die Teleskopringe 14, 15 ,16 hier punktuell mit dem Mantel 12 verbunden sind.

Dabei gewährleistet der Mantel 12 des Balges 9a, 9b die Dichtheit gegenüber Schmutz und Flüssigkeiten, während die in der Außenseite des Mantels 12 angeordnete Schutzeinrichtung 13a, 13b den Mantel vor mechanischer Schädigung und/oder thermischer Überlastung schützt.

Die Teleskopringe 14, 15 ,16, die in der in den Figuren 2a und 2b gezeigten Ausführungsvariante punktuell mit dem Mantel 12 verbunden sind, vorzugsweise verklebt oder aufvulkanisiert, schirmen dabei in jedem Faltzustand des Balges 9a den Mantel 12 zu den Bremsbelägen hin ab. Figur 2a zeigt dabei den im Neuzustand der Bremsbeläge vorherrschenden eingefalteten Zustand des Balges 9a und Figur 2b den im Verschleißzustand der Bremsbeläge vorherrschenden ausgefalteten Zustand des Balges 9a. Gut zu erkennen ist, dass die Verbindungsstellen 19 ein Ausfalten des Balges ermöglichen bei Beibehaltung der Abschirmung des Mantels durch die Teleskopringe 14, 15 ,16.

Anstelle des Aufklebens oder Aufvulkanisierens der Teleskopringe 14, 15 ,16 auf dem Mantel 12 kann die Verbindung zwischen den Teleskopringen 14, 15, 16 und dem Mantel 12 auch formschlüssig erfolgen, wie es beispielhaft in Figur 2c gezeigt ist. Hier weist der Mantel 12 im Bereich der Faltenspitzen sich nach außen zu den Teleskopringen 14, 15 ,16 hin erstreckende Schnappelemente 20 auf, die in in den Teleskopringen 14, 15 ,16 vorgesehenen Durchbrüche eingreifen und so die Teleskopringen 14, 15 ,16 am Mantel festlegen.

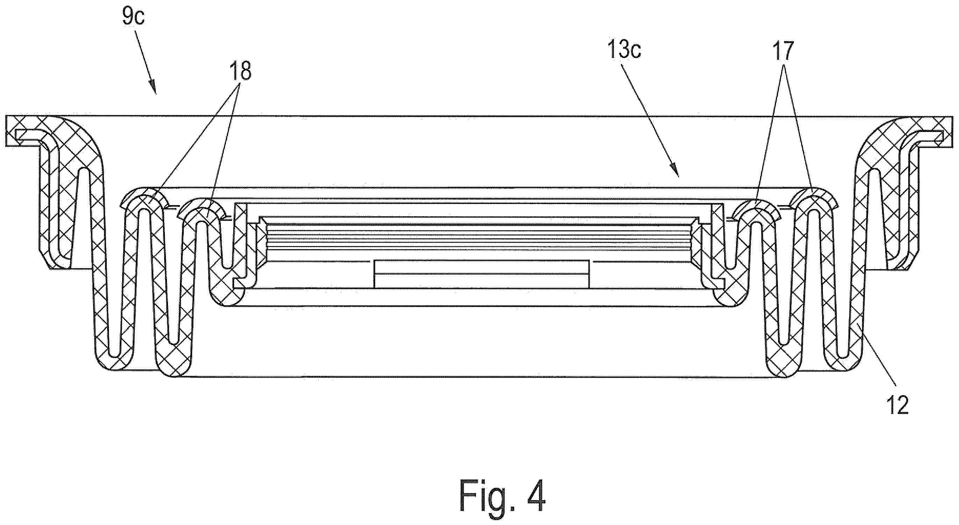

Bei der in Figur 4 gezeigten Ausführungsvariante des Balges 9c besteht die Schutzeinrichtung aus mehreren Ringen 17, die vorzugsweise die Faltenspitzen 18 des vorzugsweise als Faltenbalg ausgebildeten Balges 9c abschirmen, bzw. vor mechanischer Beschädigung oder thermischer Überlastung schützen. Die Ringe 17 sind dabei vorzugsweise stoff- oder formschlüssig mit den Faltenspitzen 18 des Mantels 12 verbunden.

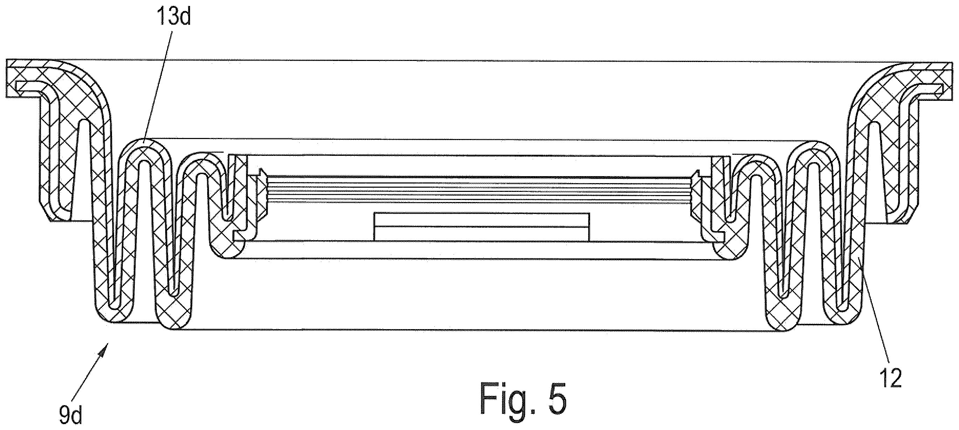

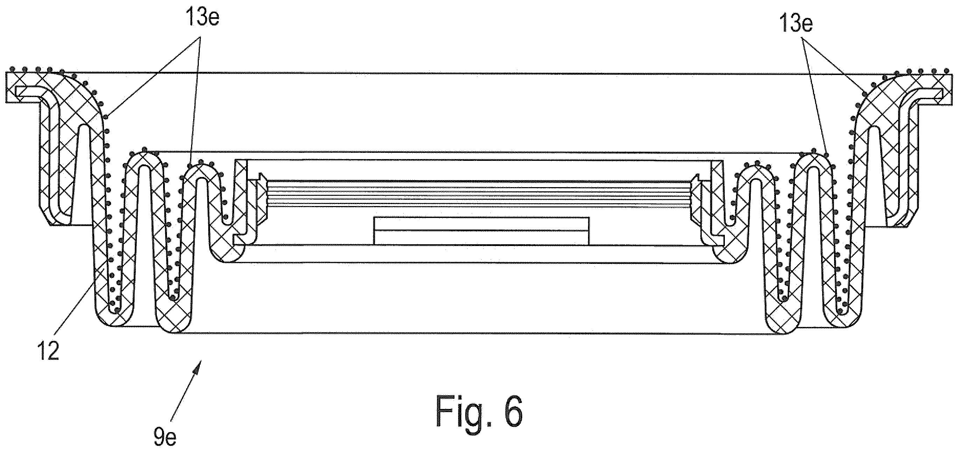

Bei der in den Figuren 5 und 6 gezeigten Ausführungsvariante des erfindungsgemäßen Balges 9d, 9e ist die Schutzeinrichtung als die Außenseite des Mantels 12 bedeckende Schicht 13d, 13e ausgebildet, wobei in Figur 5 eine Ausführungsvariante gezeigt ist, bei der die Außenseite des Mantels 12 bedeckende Schicht 13d eine geschlossene Oberfläche bildet und ebenso wie das Material des Mantels 12 aus einem flexiblen Material besteht.

Bei der in Figur 6 gezeigten Ausführungsvariante weist die Außenseite des Mantels 12 bedeckende Schicht 13e eine offenporige Oberfläche auf, beispielsweise in Gestalt eines Gewebes, eines Gitters oder einer Gaze, insbesondere eine Metallgaze.

Entsprechend zeichnet sich die in Figur 1 gezeigte pneumatisch oder elektromotorisch betätigbare Scheibenbremse durch einen Balg 9a, 9b, 9c, 9d, 9e aus, der gemäß einer der oben genannten Varianten ausgebildet ist, wodurch die Robustheit damit die Nutzungsdauer des Balges 9a, 9b, 9c, 9d, 9e erhöht wird.

### Bezugszeichenliste

- 1: Bremssattel
- 2: Zuspanneinrichtung
- 3: Bremsscheibe
- 4: Bremsbelag
- 5: Trägerplatte
- 6: Reibbelag
- 7: Druckstück
- 8: Verschlussplatte
- 9a: Balg
- 9b: Balg
- 9c: Balg
- 9d: Balg
- 9e: Balg
- 11: Stellspindel
- 12: Mantel
- 13a: Schutzeinrichtung
- 13b: Schutzeinrichtung
- 13c: Schutzeinrichtung
- 13d: Schutzeinrichtung
- 13e: Schutzeinrichtung
- 14: Teleskopring
- 15: Teleskopring
- 16: Teleskopring
- 17: Ringe
- 18: Faltenspitze
- 19: Verklebung
- 20: Schnappelement

## Patentansprüche

1. Balg (9a, 9b, 9c, 9d, 9e) einer Scheibenbremse eines Nutzfahrzeugs, insbesondere Faltenbalg, aufweisend einen flexiblen Mantel (12) aus einem elastischen Material, insbesondere einem Elastomer, wobei auf einer Außenseite des Mantels (12) eine mit dem Mantel (12) verbundene und diesen zumindest abschnittsweise abschirmende Schutzeinrichtung (13a, 13b, 13c, 13d, 13e) angeordnet ist, die mehrere zueinander beweglich ineinander gesteckte Teleskopringe (14, 15, 16) aufweist, **dadurch gekennzeichnet, dass** jeder der Teleskopringe (14, 15, 16) punktuell stoff- oder formschlüssig mit der Außenseite des Mantels (12) verbunden ist.

2. Balg nach Anspruch 1, **dadurch gekennzeichnet, dass** die Schutzeinrichtung (13a, 13b, 13c, 13d, 13e) als flexible Schutzschicht ausgebildet ist, die zumindest abschnittsweise stoff- oder formschlüssig mit der Außenseite des Mantels (12) verbunden ist.

3. Balg nach Anspruch 2, **dadurch gekennzeichnet, dass** die Schutzeinrichtung (13a, 13b, 13d) eine die Außenseite des Mantels (12) bedeckende geschlossene Oberfläche aufweist.

4. Balg nach Anspruch 2, **dadurch gekennzeichnet, dass** die Schutzeinrichtung (13e) eine die Außenseite des Mantels (12) bedeckende offenporige Oberfläche aufweist.

5. Balg nach Anspruch 4, **dadurch gekennzeichnet, dass** die Schutzeinrichtung (13e) als Gewebe, Gitter oder Gaze ausgebildet ist..

6. Balg nach einem der vorhergehenden Ansprüche, **dadurch gekennzeichnet, dass** jeder der Teleskopringe (14, 15, 16) punktuell mit dem Mantel (12) verklebt oder aufvulkanisiert ist.

7. Balg nach einem der Ansprüche 1 bis 5, **dadurch gekennzeichnet, dass** mindestens einer der Teleskopringe (14, 15, 16) einen Durchbruch aufweist, in den ein an dem Mantel (12) angeordnetes Schnappelement (20) eingreift.

8. Balg (9a, 9b, 9c, 9d, 9e) einer Scheibenbremse eines Nutzfahrzeugs, insbesondere Faltenbalg, aufweisend einen flexiblen Mantel (12) aus einem elastischen Material, insbesondere einem Elastomer, wobei auf einer Außenseite des Mantels (12) eine mit dem Mantel (12) verbundene und diesen zumindest abschnittsweise abschirmende Schutzeinrichtung (13a, 13b, 13c, 13d, 13e) angeordnet ist, **dadurch gekennzeichnet, dass** die Schutzeinrichtung (13c) mehrere Ringe (17) aufweist, die jeweils ein Teilstück des Mantels (12) abdecken und mit diesem Teilstück des Mantels (12) stoff- oder formschlüssig verbunden sind.

9. Balg nach Anspruch 8, **dadurch gekennzeichnet, dass** der Balg (9c) als Faltenbalg mit einem mehrere Falten aufweisenden Mantel (12) ausgebildet ist und die Ringe (17) jeweils eine Faltenspitze (18) des Mantels (12) abdecken.

10. Balg nach Anspruch 8, **dadurch gekennzeichnet, dass** die Schutzeinrichtung (13a, 13b, 13c, 13d, 13e) als flexible Schutzschicht ausgebildet ist, die zumindest abschnittsweise stoff- oder formschlüssig mit der Außenseite des Mantels (12) verbunden ist.

11. Balg nach einem der vorhergehenden Ansprüche, **dadurch gekennzeichnet, dass** die Schutzeinrichtung (13a, 13b, 13c, 13d, 13e) aus Metall, einem Duroplast oder einem Thermoplast oder einem Composit aus Metall, Duroplast und/oder Thermoplast besteht.

12. Pneumatisch oder elektromotorisch betätigbare Scheibenbremse eines Nutzfahrzeugs, aufweisend einen eine Bremsscheibe (3) übergreifenden Bremssattel (1), mindestens eine Zuspanneinrichtung (2) zum Zuspannen der Scheibenbremse, wobei die mindestens eine Zuspanneinrichung (2) auf ihrer der Bremsscheibe (3) zugewandten Seite ein Druckstück (7) aufweist, das gegenüber dem Bremssattel (1) oder einem mit dem Bremssattel (1) verbundenen Bauteil durch einen an diesem und am Druckstück (7) angeschlossenen, verformbaren Balg (9a, 9b, 9c, 9d, 9e) abgedichtet ist, **dadurch gekennzeichnet, dass** der Balg (9a, 9b, 9c, 9d, 9e) gemäß einem oder mehreren der vorstehenden Ansprüche ausgebildet ist, wobei die Schutzeinrichtung (13a, 13b, 13c, 13d, 13e) auf der der Bremsscheibe (3) zugewandten Seite des Mantels (12) des Balges (9a, 9b, 9c, 9d, 9e) angeordnet ist.

## Claims

1. A gaiter (9a, 9b, 9c, 9d, 9e) of a disc brake of a utility vehicle, in particular a folding gaiter, having a flexible jacket (12) made of an elastic material, in particular an elastomer, there being arranged on an outer side of the jacket (12) a protective device (13a, 13b, 13c, 13d, 13e), which is connected to and shields at least sections of the jacket (12) and has a plurality of telescopic rings (14, 15, 16) inserted one inside the other such that they are able to move, **characterised in that** each of the telescopic rings (14, 15, 16) is connected at certain points by bonding or in a form fit to the outer side of the jacket (12).

2. A gaiter according to claim 1, **characterised in that** the protective device (13a, 13b, 13c, 13d, 13e) is designed as a flexible protective layer, which is connected in at least certain sections by bonding or in a form fit to the outer side of the jacket (12).

3. A gaiter according to claim 2, **characterised in that** the protective device (13a, 13b, 13d) has a closed surface covering the outer side of the jacket (12).

4. A gaiter according to claim 2, **characterised in that** the protective device (13e) has a open-pored surface covering the outer side of the jacket (12).

5. A gaiter according to claim 4, **characterised in that** the protective device (13e) is designed as a textile, grid or gauze.

6. A gaiter according to any of the preceding claims, **characterised in that** each of the telescopic rings (14, 15, 16) is bonded or vulcanised to the jacket (12) in at least certain sections.

7. A gaiter according to any of claims 1 to 5, **characterised in that** at least one of the telescopic rings (14, 15, 16) has an opening in which a snap element (20) arranged on the jacket (12) engages.

8. A gaiter (9a, 9b, 9c, 9d, 9e) of a disc brake of a utility vehicle, in particular a folding gaiter, having a flexible jacket (12) made of an elastic material, in particular an elastomer, there being arranged on an outer side of the jacket (12) a protective device (13a, 13b, 13c, 13d, 13e), which is connected to and shields at least sections of the jacket (12), **characterised in that** the protective device (13c) has a plurality of rings (17), which each cover a part of the jacket (12) and are connected by bonding or in a form fit to this part of the jacket (12).

9. A gaiter according to claim 8, **characterised in that** the gaiter (9c) is designed as a folding gaiter with a jacket (12) having a plurality of folds and the rings (17) each cover a fold point (18) of the jacket (12).

10. A gaiter according to claim 8, **characterised in that** the protective device (13a, 13b, 13c, 13d, 13e) is designed as a flexible protective layer, which is connected in at least certain sections by bonding or in a form fit to the outer side of the jacket (12).

11. A gaiter according to any of the preceding claims 8, **characterised in that** the protective device (13a, 13b, 13c, 13d, 13e) is made of metal, a duroplast or a thermolast or of a composite of metal, duroplast and/or thermoplast.

12. A disc brake, which can be actuated pneumatically or by means of an electric motor, of a utility vehicle having a brake calliper (1) spanning a brake disc (3) and at least one application device (2) for applying the disc brake, the at least one application device (2) having on the side facing the brake disc (3) a pressure piece (7) that is sealed in relation to the brake calliper (1) or a component connected to the brake calliper (1) by a deformable gaiter (9a, 9b, 9c, 9d, 9e) connected to the component and to the pressure piece (7), **characterised in that** the gaiter (9a, 9b, 9c, 9d, 9e) is designed according to one or more of the preceding claims, the protective device (13a, 13b, 13c, 13d, 13e) being arranged on the side of the jacket (12) of the gaiter (9a, 9b, 9c, 9d, 9e) facing the brake disc (3).

## Revendications

1. Soufflet (9a, 9b, 9c, 9d, 9e) d'un frein à disque d'un véhicule utilitaire, notamment soufflet à plis, comprenant une enveloppe (12) souple en une matière élastique, notamment en un élastomère, dans lequel, sur une face extérieure de l'enveloppe (12), est disposé un dispositif (13a, 13b, 13c, 13d, 13d, 13e) de protection, qui est relié à l'enveloppe (12), qui la protège, au moins par endroit, et qui a plusieurs anneaux (14, 15, 16) télescopiques enfilés l'un dans l'autre en étant mobiles les uns par rapport aux autres, **caractérisé en ce que** chaque anneau (14, 15, 16) télescopique est relié ponctuellement à coopération de matière ou à complémentarité de forme à la face extérieure de l'enveloppe (12).

2. Soufflet suivant la revendication 1, **caractérisé en ce que** le dispositif (13a, 13b, 13c, 13d, 13e) de protection est constitué sous la forme d'une couche de protection souple, qui est reliée, au moins par endroit, à coopération de matière ou à complémentarité de forme à la face extérieure de l'enveloppe (12).

3. Soufflet suivant la revendication 2, **caractérisé en ce que** le dispositif (13a, 13b, 13d) de protection a une surface fermée recouvrant la face extérieure de l'enveloppe (12).

4. Soufflet suivant la revendication 2, **caractérisé en ce que** le dispositif (13e) de protection a une surface à pores ouverts recouvrant la face extérieure de l'enveloppe (12).

5. Soufflet suivant la revendication 4, **caractérisé en ce que** le dispositif (13e) de protection est constitué sous la forme d'un tissu, d'un grillage ou d'une gaze.

6. Soufflet suivant l'une des revendications précédentes, **caractérisé en ce que** chacun des anneaux (14, 15, 16) télescopiques est collé ou vulcanisé ponctuellement à l'enveloppe (12).

7. Soufflet suivant l'une des revendications 1 à 5, **caractérisé en ce qu'**au moins l'un des anneaux (14, 15, 16) télescopiques a une traversée, dans laquelle pénètre un élément (20) d'encliquetage monté sur l'enveloppe (12).

8. Soufflet (9a, 9b, 9c, 9d, 9e) d'un frein à disque d'un véhicule utilitaire, notamment soufflet à plis, comprenant une enveloppe (12) souple en une matière élastique, notamment en un élastomère, dans lequel, sur une face extérieure de l'enveloppe (12), est disposé un dispositif (13a, 13b, 13c, 13d, 13d, 13e) de protection relié à l'enveloppe (12) et la protégeant, au moins par endroits, **caractérisé en ce que** le dispositif (13c) de protection a plusieurs anneaux (17), qui recouvrent chacun une partie de l'enveloppe (12) et qui sont reliés à coopération de matière ou à complémentarité de forme à cette partie de l'enveloppe (12).

9. Soufflet suivant la revendication 8, **caractérisé en ce que** le soufflet est constitué sous la forme d'un soufflet à plis ayant une enveloppe (12) comprenant plusieurs plis et les anneaux (17) recouvrent chacun une pointe (18) de plis de l'enveloppe (12).

10. Soufflet suivant la revendication 8, **caractérisé en ce que** le dispositif (13a, 13b, 13c, 13d, 13e) de protection est constitué sous la forme d'une couche de protection souple, qui est reliée, au moins par endroits, à coopération de matière ou à complémentarité de forme à la face extérieure de l'enveloppe (12).

11. Soufflet suivant l'une des revendications précédentes, **caractérisé en ce que** le dispositif (13a, 13b, 13c, 13d, 13e) de protection est en métal, en une matière thermodurcissable ou en une matière thermoplastique ou en un composite de métal, de matière thermodurcissable et/ou de matière thermoplastique.

12. Frein à disque pouvant être actionné pneumatiquement ou par moteur électrique d'un véhicule utilitaire, comportant un étrier (1) de frein enjambant un disque (3) de frein, au moins un dispositif (2) de serrage pour serrer le frein à disque, dans lequel le au moins un dispositif (10) de serrage a, de la face tournée vers le disque (3) de frein, une pièce (7) de pression, qui est rendue étanche, par rapport à l'étrier (1) de frein ou par rapport à une pièce reliée à l'étrier (1) de frein, par un soufflet (9a, 9b, 9c, 9d, 9e) déformable raccordé à celle-ci et à la pièce (7) de pression, **caractérisé en ce que** le soufflet (9a, 9b, 9c, 9d, 9e) est constitué suivant l'une ou plusieurs des revendications précédentes, le dispositif (13a, 13b, 13c, 13d, 13e) de protection étant disposé sur la face, tournée vers le disque (3) de frein, de l'enveloppe (12) du soufflet (9a, 9b, 9c, 9d, 9e).
